# EUROPÄISCHE PATENTSCHRIFT

(11) **EP 2 392 742 B1**
(45) Veröffentlichungstag und Bekanntmachung des Hinweises auf die Patenterteilung: **27.01.2016**
(21) Anmeldenummer: 11001599.7
(22) Anmeldetag: 26.02.2011
(51) Int. Cl.: E04B 2/74, E04C 2/38, E04B 1/61, E04F 19/06, E04B 2/78

(54) **Kantenprofilelement**
Edge profile element
Elément de profilé d'arête

(30) Priorität: 07.05.2010 DE 202010006529 U
(43) Veröffentlichungstag der Anmeldung: 07.12.2011
(60) Teilanmeldung: 14150054.6
(73) Patentinhaber: Hestex Systems B.V., 7332 BE Apeldoorn (NL)
(72) Erfinder: Nicolaas, Arie Sint, 7301 BC Apeldoorn (NL)
(74) Vertreter: Stenger Watzke Ring

(56) Entgegenhaltungen:
- EP-A2- 0 322 403
- DE-A1- 2 948 971
- DE-A1- 3 820 246
- DE-U1-202005 003 268
- FR-A1- 2 729 985
- GB-A- 1 436 412

## Beschreibung

Die vorliegende Erfindung betrifft ein Wandbausystem nach dem Oberbegriff des Anspruchs 1.

Systeme für den Aufbau von Wänden, insbesondere den mobilen Aufbau, sind insbesondere für den Bereich Messebau bekannt, Stand der Technik und umfangreichem Einsatz. Solche Systeme für Regelsysteme, Messeaufbauten und dergleichen verwenden üblicherweise Klemmverbindersysteme. Zwischen Rahmenteilen wie Pfosten, Regalbrettern und ähnlichen Verbindungsstrukturen werden lösbare Verbinder eingesetzt. So lässt sich eine Schnellverbindetechnik realisieren, so dass ein belastbarer Aufbau erreicht werden kann. Um eine hohe Mobilität erreichen zu können, sind ein schneller Auf- und Abbau angestrebt. Beispielsweise wird ein gattungsgemäßes System in der EP 1 234 985 B1 offenbart, dort Klemmverbindersystem genannt. Eine Ankereinheit der Verbindungsvorrichtung ist klauenförmig ausgebildet. Sie weist bewegbare Ankerelemente auf, die mit Streben eines Gegenelementes wie einem Pfosten oder dergleichen verbindbar sind. Hierzu werden die Ankerelemente in eine Öffnung des Pfostens eingeführt. Das Festlegen erfolgt dadurch, dass an den Enden der Ankerelemente ausgebildete Klauen den Rand einer Nut oder Öffnung hintergreifen und auf diese Weise die Verbindungsvorrichtung am Pfosten festlegen. Der Antrieb besteht aus einem Getriebe, meistens exzenterbetätigt.

Vergleichbare Systeme sind gezeigt und beschrieben in der WO 2009/000390 A1 und dergleichen. Es lassen sich mit derartigen Verbindern unter zugehörigen Profilsystemen, beispielsweise auch beschrieben in EP 0 412 339 A2, beispielsweise Messestände kreieren.

Im Stand der Technik ist es bekannt, dass aus Pfosten und Riegeln, meistens gebildet aus völlig gleichartigen Strangelementen mit Hohlprofilbereichen und hinterschnittenen Nutbereichen, Wände aufgebaut werden. Dies erfolgt dadurch, dass beispielsweise ein Pfosten in seinen Endbereichen mit den Stirnkanten eines Riegels über entsprechende Klemmverbinder verbunden wird. Auf diese Weise entsteht eine Art Rahmen, der offene hinterschnittene Nuten an der Innenwandung zeigt. In diese Nuten lässt sich ohne weiteres ein Ausfachelement, beispielsweise eine Pressspanplatte, eine Glasplatte oder dergleichen einschieben. Es verbleibt jedoch mindestens eine freie Kante, auf die dann beispielsweise wiederum ein Pfosten bzw. ein Riegel aufgesetzt werden muss, der dann mit den angrenzenden Pfosten-/Riegelelementen verbunden werden muss.

Ein alternatives System offenbart die DE 29 48 971 A1. Hierbei wird ein Flächenkonstruktionselement unter ganz bewusster Weglassung horizontaler Zargen an Eingriffsprofilen befestigt. Die Eingriffsprofile werden in Nuten von Pfosten eingeführt und durch stirnseitig an die Eingriffsprofile angesetzte Verschlusseinrichtungen verspannt.

Die GB 1 436 412 betrifft eine Säule zur Raumteilung. In die Säule können elastische Anschlussstücke eingerastet werden, um ein Wandelement zwischen einer Rückwand des Anschlussstücks und der Säule zu verklemmen.

Die DE 20 2005 003 268 U1 betrifft ein Profilsystem für Trennwände. Die Trennwände werden mit ihren Kanten in im Querschnitt dreieckige Teilprofile eingefügt, wobei jeweils zwei Teilprofile zusammengefügt werden und sich somit ein im Querschnitt quadratischer Pfosten ergibt.

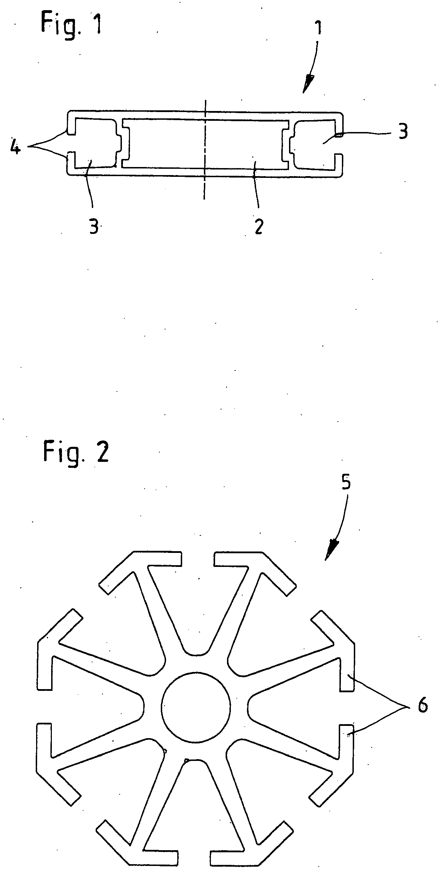

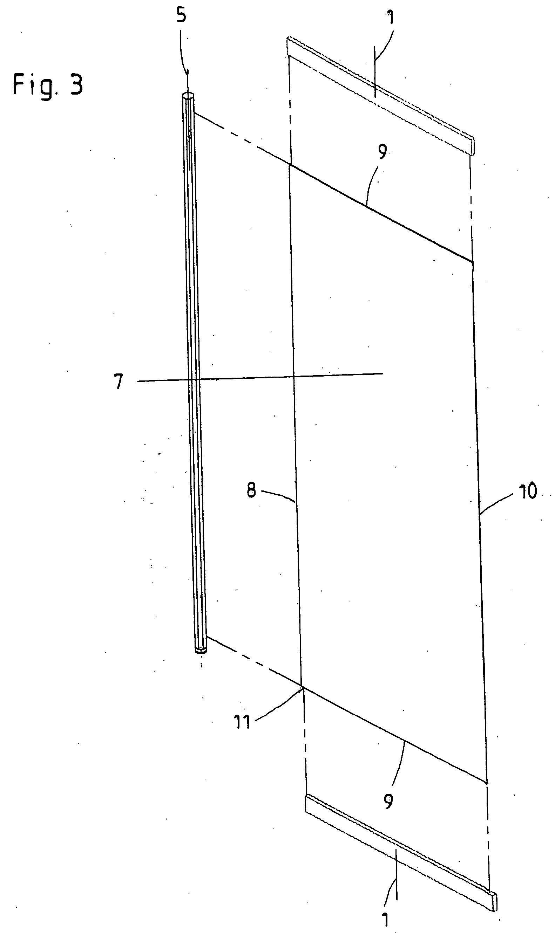

Als Beispiel für entsprechende Strangprofile sind die Figuren 1 und 2 beigelegt. Eine Zusammenbaumöglichkeit ergibt sich aus der Figur 3. Die Figuren 1 bis 3 zeigen alle den Stand der Technik.

Fig. 1 zeigt den Querschnitt eines Rechteckprofils 1, welches in der Mitte eine rechteckige Hohlkammer 2 und an beiden Seiten davon Nutebereiche 3 aufweist. Die Nuten 3 sind teilgeschlossen, und zwar durch die Schenkel 4, so dass sich eine hinterschnittene Nut ergibt, hinter die die pilzartigen Köpfe von Klemmverbindern eingreifen können. Dabei gibt es entweder sogenannte Hammerkopfverbinder, die in eine Einsetzposition in die Nut 3 eingeschoben und dann durch querdrehen hinter die Schenkel 4 gebracht werden, und es gibt sogenannte Klemmverbinder, bei welchen zwei Federelemente die Schenkel 4 hintergreifend in die Nut 3 eingesetzt sind. In beiden Fällen werden die Elemente beispielsweise durch Drehen eines Exzenters angezogen. Dabei bewegen sie sich relativ zu einem nicht gezeigten Körper, der wiederum in einer Hohlkammer 2 eines Profils eingesetzt und dort befestigt ist. Auf diese Weise kann also ein Profil 1 mit seiner Stirnkante an ein gleichartiges Profil 1 angesetzt und mit diesem dauerhaft aber lösbar verbunden werden.

Ein alternatives Profil ist in dem Querschnitt in Fig. 2 gezeigt, wobei es sich um einen achteckigen Pfosten handelt, bei welchem eine Vielzahl von Nuten gebildet sind, deren hinterschnittene Schenkel mit 6 bezeichnet sind. Derartige Achteckprofile können beispielsweise als Pfosten eingesetzt werden.

Fig. 3, ebenfalls Stand der Technik, zeigt eine herkömmliche Wand. Ein Wandelement 7, beispielsweise eine Pressspanplatte, eine Glasscheibe, eine Hartfaserplatte oder dergleichen, die lackiert oder sonst wie dekoriert sein kann, ist mit einer Längskante 8 in die Nut eines Profils 5 eingesetzt. Die beiden daran angrenzenden Seitenkanten 9 sind in die Nuten 3 jeweils eines Profils 1 eingesetzt. In die Hohlkammern 2 der Profile 1 sind Klemmverbinder eingesetzt, die dann die Nut 6 des Profils 5 hintergreifend mit diesen verbunden werden. Wie die Verbindungsstelle 11 zeigt, sind dabei die Profile 1 praktisch so lang wie die Seitenkanten 9, während das Profil 5 um eine Länge gegenüber der Kante 8 verlängert ist, so dass die Verbinder 1 mit dem Profil 5 verbunden werden können. Es ist offensichtlich, dass die Kante 10 freisteht. Diese würde nunmehr dem Anschluss an die nächste Wand dienen können oder zwischen die Profile 1 könnte ein weiteres Kantenprofil 1 entlang der Kante 10 langgesetzt werden, beispielsweise ebenfalls das Pfostenelement der benachbarten Wand.

Es versteht sich von selbst, dass anstelle des Profils 5 an dieser Stelle auch ein weiteres Profil 1 als Pfosten eingesetzt und mit den Riegeln 1 an den Querkanten 9 verbunden werden kann. Dieser aus dem Stand der Technik bekannten Wände werden vor Ort montiert.

Vom Ablauf her werden also die erforderlichen Pfostenelemente und Riegelelemente vorgefertigt. Die notwendige Anzahl von Verbindern wird bereitgelegt und die notwendige Anzahl von Wandbauplatten wird bereitgelegt. Alle diese Elemente werden separat transportiert. Vor Ort wird dann Wand für Wand aufgebaut. Es zeigt sich, dass damit sehr viel Arbeit vor Ort aufgewandt werden muss. Darüber hinaus sind die Kanten der Wandelemente gefährdet. Das ständige Aufbauen und natürlich nach Abschluss einer Messe beispielsweise erforderliche Wiederabbauen und Transportieren in Einzelteilen ist weder für die Profilelemente noch die Verbinder noch für die Wandbauplatten vorteilhaft. Die Elemente unterliegen einem erheblichen Verschleiß und sind erheblichen Beschädigungsgefahren ausgesetzt.

Ausgehend vom vorbeschriebenen Stand der Technik liegt der Erfindung die **Aufgabe** zugrunde, ein Wandbausystem der beschriebenen Art dahingehend zu verbessern, dass ein größerer Grad an Vorfertigungsmöglichkeiten gegeben ist und eine Beschädigung der einzelnen Elemente sowie ein häufiges Zerlegen und Zusammenbauen vermieden werden.

Die technische **Lösung** dieser Aufgabe ergibt sich gemäß Kennzeichen des Anspruches 1.

Beim erfindungsgemäßen System wird vorgeschlagen, ein Kantenprofilelement einzusetzen, welches einerseits eine Nut aufweist, die zur Aufnahme der einer freien Kante eines Plattenelementes dient. Dem gegenüberliegend wird ein Federelement ausgebildet. Dieses Federelement kann Nuten entsprechender Pfosten- oder Riegel-Profile eingesetzt werden. Darüber hinaus hat das Kantenprofilelement einen Bereich zur Verbindung mit einem weiteren Profilelement.

Gemäß einem vorteilhaften Vorschlag der Erfindung ist der Verbindungsbereich durch ein Hohlprofil gebildet, in welches ein Verbinder, beispielsweise ein Klemmverbinder einsetzbar ist. Dieser kann dann in entsprechend beschriebener Weise mit einem Pfosten- oder Riegel-Element verbunden werden, in dem ein pilzartiger Kopf in eine hinterschnittene Nut eingreift.

Das Kantenprofilelement ermöglicht es, zunächst einmal einen vollständigen Rahmen aus Profilelementen zu bilden, also Pfosten-, Riegelelemente und das Kantenprofilelement stellen die vier Kanten eines geschlossenen Rechtecks dar. Zum inneren weisen umlaufend vier Nuten von den Pfosten- und Riegelelementen sowie den Kantenprofilelement. Diese Nuten dienen der Aufnahme einer Wandbauplatte. Da die Elemente, also die Pfosten-, Riegel- und Kantenprofilelemente miteinander verbindbar sind, entsteht auf diese Weise ein vorgefertigtes Wandbauplattenelement. Ein derartiges vorgefertigtes Wandbauplattenelement kann in seiner Gesamtheit transportiert werden, so dass die Wandbauplatte im Kantenbereich nicht mehr Beschädigungen unterliegt. Weiterhin kann das einmal gefertigte Wandbauplattenelement immer wiederverwendet werden, ohne dass es ständig zusammengebaut und zerlegt werden muss. Darüber hinaus können gleiche Wandbauplattenelemente vor Ort auf einfachste Weise miteinander verbunden werden. Dabei können die Riegelelemente des einen Wandbauplattenelementes mit ihren freien Stirnkanten mittels entsprechender Klemmverbinder mit dem Pfostenelement des nächsten Wandbauplattenelementes verbunden werden. Da das Kantenprofilelement eine Feder aufweist, setzt sich diese automatisch in die Nut des Pfostenelementes ein. Auf diese Weise können sehr schnell vorgefertigte Wandbauplattenelemente zu einer ganzen Wand zusammengebaut werden. Sogar ein Übereinanderbau ist ohne weiteres möglich. Im Eckbereich können dann unter Verwendung entsprechender Eckprofile oder Mehrfachprofile - wie beispielsweise das in Fig. 2 gezeigte - schnell Wandbauplattenelemente über die Ecke gebaut werden. Auf diese Weise lassen sich sehr leicht und sehr schnell Räume erzeugen.

Mittels des Kantenprofilelementes lassen sich neue Wandbauplattenelemente herstellen, die in ihrer Gesamtheit zu einem erfindungsgemäßen System für den Wandaufbau verwendbar sind. Die besonderen Vorteile ergeben sich aus der Möglichkeit der vollständigen Vorfertigung von Wandbauplattenelementen und der Vermeidung von wiederholter Montage und Demontage sowie der Vermeidung von Beschädigungen der einzelnen Elemente. Neben dem Materialvorteil ergeben sich insbesondere erhebliche Zeitvorteile, denn ein Messeaufbau kann praktisch vollständig vorgefertigt werden und braucht vor Ort nur noch zusammengestellt werden.

Weitere Vorteile und Merkmale ergeben sich aus der folgenden Beschreibung anhand der Figuren. Dabei zeigen:
- Fig. 1: eine Schnittdarstellung durch ein Hohlprofilelement (Stand der Technik);
- Fig. 2: eine Schnittdarstellung durch ein weiteres Profilelement (Stand der Technik);
- Fig. 3: eine schematische Darstellung eines Wandbauelementes nach dem Stand der Technik;
- Fig. 4: eine Schnittdarstellung durch eine Ausführungsform eines Kantenprofilelementes;
- Fig. 5: eine schematische Darstellung eines Wandbauplattenelementes unter Verwendung des Kantenprofilelementes und
- Fig. 6: eine schematische Draufsicht auf ein Wandbauplattenelement.

Ein Kantenprofilelement 15 weist eine Nut 16 und gegenüberliegend eine Feder 17 auf. Die Nut 16 ist im gezeigten Ausführungsbeispiel in Längsrichtung mit Zähnen oder Klinken versehen. Auf diese Weise kann das Kantenprofilelement 15 auf die Seitenkante einer Wandbauplatte aufgesteckt werden. Im gezeigten Ausführungsbeispiel weist das Profil eine zwischen Nut 16 und Feder 17 liegende Hohlkammer 18 auf, die der Aufnahme eines Klemmverbinders dient. Der Klemmverbinder kann dann wiederum mit seinem pilzartigen Kopf in die Nut 3 eines Profils 1 eingesetzt werden, um mit diesem verbunden zu werden.

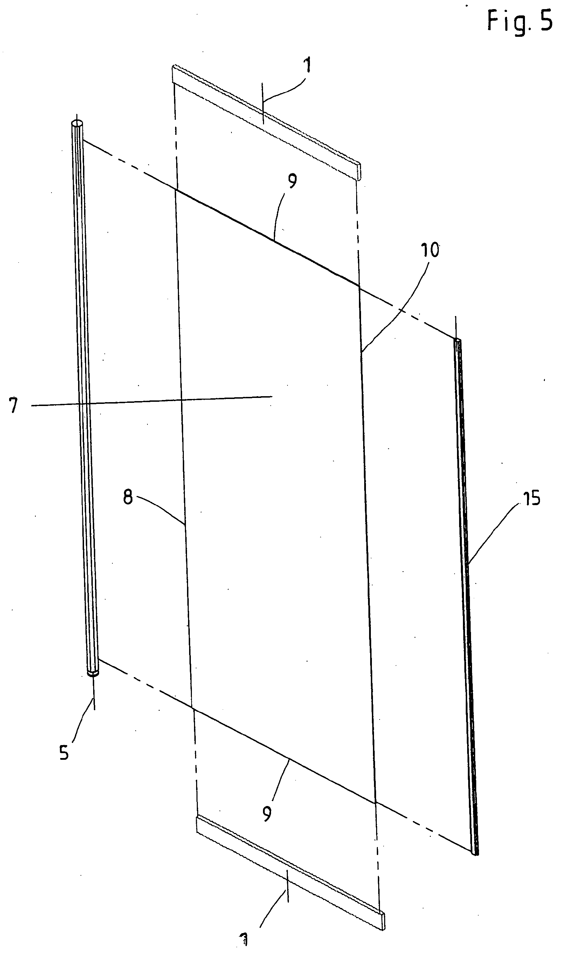

Fig. 5 zeigt ein Ausführungsbeispiel für den Aufbau eines Wandbauplattenelementes nach der Erfindung. Die Wandbauplatte 7 ist, wie bereits in Fig. 3 zum Stand der Technik beschrieben, mit einem Pfostenelement 5 und damit fest verbundenen Riegelelementen 1 aus Profilelementen verbunden, die die Seitenkanten 8 und 9 abdecken. Auf die Seitenkante 10 ist in erfindungsgemäßer Weise ein Kantenprofilelement 15 aufgesteckt und an den beiden Stirnkanten mit den Profilelementen 1 verbinden. Auf diese Weise entsteht ein vorgefertigtes, transportierbares Wandbauplattenelement. Mit einer Vielzahl solcher Wandbauplattenelemente können ohne weiteres ganze Räume in schnellster Montagezeit gefertigt werden. Da die Wandbauplattenelemente vorfertigbar sind, vergeht vergleichsweise wenig Zeit beim Aufbau. Darüber hinaus müssen die einzelnen Elemente nicht mehr demontiert werden, sondern können in ihrer Gesamtheit transportiert werden. Auf diese Weise werden weder die Wandbauplatten 7 im Flächen- und/oder insbesondere Kantenbereich beschädigt noch werden die Profilelemente durch falsche Handhabung beschädigt oder die Verbinder ermüden durch häufiges Öffnen und Schießen.

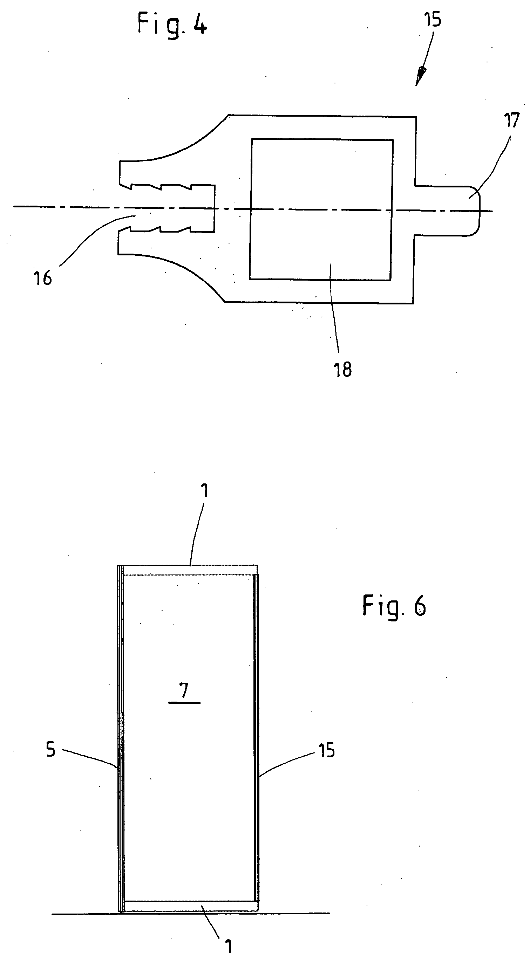

Es ergibt sich dann ein Wandbauplattenelement wie es im Zusammenbau in Fig. 6 gezeigt ist. Dieses kann dann ohne weiteres mit gleichartigen Wandbauplattenelementen verbunden werden. Dabei versteht es sich von selbst, dass anstelle des Pfostenelements 5 auch ein Element 1 eingesetzt werden kann, wenn es sich um ebene Wandbereiche handelt, so dass entsprechende Mehrfachnutelemente nur im Eckbereich eingesetzt werden müssen. Auch können natürlich Eckprofile eingesetzt werden und dergleichen.

Die beschriebenen Ausführungsbeispiele dienen nur der Erläuterung und sind nicht beschränkend.

### Bezugszeichenliste

- 1: Hohlprofil
- 2: Hohlkammer
- 3: Nut
- 4: Schenkel
- 5: Profil
- 6: Nutschenkel
- 7: Wandbauplatte
- 8: Seitenkanten
- 9: Seitenkanten
- 10: Seitenkanten
- 11: Eckbereich
- 15: Kantenprofilelement
- 16: Nut
- 17: Feder
- 18: Hohlkammer

## Patentansprüche

1. Wandbausystem mit Profilelementen (1, 5, 15), welche Hohlprofilbereiche zur Aufnahme von Verbindungselementen und an äußeren Oberflächen verlaufende Nuten mit einem Nutprofil aufweisen, wobei gleichartige Profilelemente (1, 5, 15) miteinander verbindbar sind, indem ein in ein Hohlprofil eingesetztes Verbindungselement die Nutkanten eines gleichartigen Nutprofils hintergreifend die aneinandergesetzten Nutprofile miteinander verbindet und wobei Wandbauplatten (7) als Ausfachelemente in aus Nutprofilen gebildete Rahmen einsetzbar sind, indem die Plattenkanten (8, 9, 10) der Wandbauplatten (7) in die Nuten (16) der Profilelemente (1, 5, 15) eingesetzt werden, **dadurch gekennzeichnet, dass** entlang einer der Plattenkanten (8, 9, 10) ein Kantenprofilelement (15) angeordnet ist, welches gebildet ist durch einen Profilstrang mit in Strangrichtung einerseits verlaufend einer Nut (16) zur Aufnahme der Plattenkanten (8, 9, 10) sowie an der der Nut (16) gegenüberliegenden Oberfläche einem Federelement (17), wobei zwischen Nut (16) und Federelement (17) ein Befestigungsbereich als ein Hohlprofil (18) ausgebildet ist, wobei in das Hohlprofil (18) ein Verbindungselement einsetzbar ist, das als Klemmverbinder mit einem eine Nut eines angesetzten Profilelementes (1) hintergreifenden Kopf ausgebildet ist.

2. Wandbausystem nach Anspruch 1, **dadurch gekennzeichnet, dass** das Kantenprofilelement (15) aus Aluminium gebildet ist.

3. Wandbausystem nach einem der vorhergehenden Ansprüche, **dadurch gekennzeichnet, dass** die Nutseitenwände des Kantenprofilelements (15) an der Innenseite geraut ausgebildet sind.

4. Wandbausystem nach Anspruch 3 , **dadurch gekennzeichnet, dass** die Rauheit der Nutseitenwände durch in Strangrichtung längs verlaufende Klinken ausgebildet ist.

## Claims

1. A wall construction system comprising profile elements (1, 5, 15) which comprise hollow profile sections for receiving connecting elements and grooves having a groove profile and extending on outer surfaces, wherein profile elements (1, 5, 15) of the same kind can be connected to each other, in that a connecting element, which has been inserted into a hollow profile, engages behind the groove edges of a groove profile of the same kind and thus connects the groove profiles placed next to each other and wherein wallboards (7) can be inserted as filling boards into frames formed by groove profiles by inserting the board edges (8, 9, 10) of the wallboards (7) into the grooves (16) of the profile elements (1, 5, 15), **characterized in that** an edge profile element (15) is placed along one of the board edges (8, 9, 10), which edge profile element is formed by a profile strand comprising a groove (16) for receiving the board edges (8, 9, 10), which extends into the direction of the strand, as well as a spring element (17) on the surface opposite the groove (16), wherein a fastening area is designed as a hollow profile (18) between the groove (16) and the spring element (17), wherein a connecting element can be inserted into the hollow profile (18), which connecting element is designed as a clamp connector having a head which engages behind a groove of a profile element (1) placed next to it.

2. A wall construction system according to claim 1, **characterized in that** the edge profile element (15) is made of aluminum.

3. A wall construction system according to one of the preceding claims, **characterized in that** the inner sides of the groove side walls of the edge profile element (15) are roughened.

4. A wall construction system according to claim 3, **characterized in that** the roughness of the groove side walls is obtained by catches which extend longitudinally in the direction of the strand.

## Revendications

1. Système de construction de parois comprenant des éléments profilés (1, 5, 15), qui comprennent des zones de profilé creux pour recevoir des éléments de liaison et des rainures ayant un profilé à rainure et s'étendant sur des surfaces extérieures, des éléments profilés (1, 5, 15) du même type pouvant être reliés les uns aux autres en ce qu'un élément de liaison inséré dans un profilé creux s'engage derrière les bords de rainure d'un profilé à rainure du même type et relie ainsi les profilés à rainure juxtaposés l'un à l'autre et des panneaux de paroi (7) pouvant être insérés comme des panneaux de remplissage dans des cadres formés par des profilés à rainure en insérant les bords de panneau (8, 9, 10) des panneaux de paroi (7) dans les rainures (16) des éléments profilés (1, 5, 15), **caractérisé en ce qu'**un élément profilé de bord (15) est disposé le long d'un des bords de panneau (8, 9, 10), lequel élément profilé de bord est formé par un cordon profilé comprenant une rainure (16) destinée à recevoir les bords de panneau (8, 9, 10) et s'étendant dans la direction du cordon ainsi qu'un élément de ressort (17) disposé sur la surface opposée à la rainure (16), une zone de fixation étant formée comme un profilé creux (18) entre la rainure (16) et l'élément de ressort (17), un élément de liaison pouvant être inséré dans le profilé creux (18), l'élément de liaison étant configuré comme un raccord de serrage ayant une tête, qui s'engage derrière une rainure d'un élément profilé (1) disposé à côté de celui-ci.

2. Système de construction de parois selon la revendication 1, **caractérisé en ce que** l'élément profilé de bord (15) est fabriqué en aluminium.

3. Système de construction de parois selon l'une des revendications précédentes, **caractérisé en ce que** les faces intérieures des parois latérales de rainure de l'élément profilé de bord (15) sont rendues rugueuses.

4. Système de construction de parois selon la revendication 3, **caractérisé en ce que** la rugosité des parois latérales de rainure est obtenue par des cliquets s'étendant longitudinalement dans la direction du cordon.
